# EUROPEAN PATENT SPECIFICATION

(11) **EP 1 367 578 B1**
(45) Date of publication and mention of the grant of the patent: **09.03.2011**
(21) Application number: 03000232.3
(22) Date of filing: 08.01.2003
(51) Int. Cl.: G11B 19/02, G11B 31/00

(54) **Managing option information in a combination VCR/DVD player**
Management von Optioneninformation in einem VCR/DVD-Kombinationsspieler
Management d'information d'options dans un appareil de reproduction avec VCR et DVD combinés

(30) Priority: 01.06.2002 KR 2002030919
(43) Date of publication of application: 03.12.2003
(73) Proprietor: LG Electronics, Inc., Seoul (KR)
(72) Inventor: Lee, Yong.Jin, Osan, Gyeonggi-Do (KR)
(74) Representative: Cohausz & Florack

(56) References cited:
- EP-A- 1 257 124
- US-A1- 2002 064 370

## Description

### BACKGROUND OF THE INVENTION

### 1. Field of the Invention

The present invention generally relates to electronics.

### 2. Background of the Related Art

Over the last century, electronics has played an important role in entertainment. For instance, as a result of the advent of radio, audio programming (i.e., radio programs) could be broadcasted to large amounts of people. Throughout the evolution of electronics, televisions were invented. Televisions were greatly appreciated by consumers, because video and audio data (i.e., television programs) could be broadcasted to large amounts of people. Additional developments in electronics allowed for players and recorders (i.e., CD players or tape recorders) to be used to record and/or playback audio and/or video signals on demand. Accordingly, these players or recorders did not tie viewers or listeners to broadcasting times of television programs or radio programs. To reduce the amount of space that a plurality of consumer electronic devices occupies, combination systems comprising different electronic devices have been proposed. US patent application 2002/0064370 A1 discloses a multiple deck media device having at least two decks which share a common housing. European patent application 1 257 124 A2, filed before the date of filing of the present application but published thereafter, discloses a combination system comprising a Digital Video Disc Player (DVDP) unit and a Video Cassette Recorder (VCR) unit. For set-up value input, a remote controller can be used. A controller of the combination system judges whether the set-up value into one of the units is the same type as a pre-set up value with regard to the another unit of the combination system, and when the set-up value is determined to be the same type, then the controller sets up the pre-set up value as a common set-up value with regard to both units. In a first embodiment of the combination system, the VCR unit comprises a set-up value storage unit and the DVDP unit comprises a separate DVD set-up value storage unit. In a second embodiment of the combination system, there is only a single set-up value storage unit provided. Both, the DVDP unit and the VCR unit can read needed setup values from the single set-up value storage unit. While in the first embodiment there is no memory shared by both the DVDP unit and the VCR unit provided, in the second embodiment no separate memories are provided for the DVDP unit and the VCR unit. As set-up values can be entered by means of the remote controller, the set-up value storage units allow writing access.

It is an object of the present invention to further reduce the amount of space that a consumer electronic device occupies and to lower the price of consumer appliances to make them more affordable.

To this end, an apparatus is provided, the apparatus comprising:
a power source;
a first signal reproduction and/or recording device powered by the power source;
a second signal reproduction and/or recording device powered by the power source; and
a read only memory coupled to the first signal reproduction and/or recording device and the second signal reproduction and/or recording device, wherein:
   the first signal reproduction and/or recording device comprises a first random access memory,
   the second signal reproduction and/or recording device comprises a second random access memory,
   the first signal reproduction and/or recording device comprises a first processor and the second signal reproduction and/or recording device comprises a second processor, wherein the first processor and the second processor are coupled, the second signal reproduction and/or recording device is configured to selectively load data from the read only memory to the second random access memory, and the first signal reproduction and/or recording device is configured to selectively load data from the read only memory to the first random access memory through the second processor and the first processor.
      Further provided is a method for managing option information in a composite apparatus, the composite apparatus comprising a first electronic signal reproduction and/or recording device, a second electronic signal reproduction and/or recording device and a read only memory coupled to the first electronic signal reproduction and/or recording device and to the second electronic signal reproduction and/or recording device, the first signal reproduction and/or recording device and the second signal reproduction and/or recording device having different performances from each other and powered by a common power source, wherein the first electronic signal reproduction and/or recording device comprises a first random access memory, the second electronic signal reproduction and/or recording device comprises a second random access memory, the first signal reproduction and/or recording device comprises a first processor and the second signal reproduction and/or recording device comprises a second processor, wherein the first processor and the second processor are coupled, the second electronic signal reproduction and/or recording device being configured to selectively load data from the read only memory to the second random access memory, and the first electronic signal reproduction and/or recording device being configured to selectively load data from the read only memory to the first random access memory through the second processor and the first processor, the method comprising:
      storing option information of the first and second electronic signal reproduction and/or recording devices in the read only memory;
      requesting option information to the second electronic signal reproduction and/or recording device by the first electronic signal reproduction and/or recording device if the composite apparatus is reset; and
      transmitting the requested option information to the first electronic signal reproduction and/or recording device from the second electronic signal reproduction and/or recording device.

For example, an apparatus may include both a DVD player and a video cassette recorder. Because the DVD player and the video cassette recorder may be included in the same consumer electronic module, many of the parts can be shared. In particular, a read-only-memory (i.e., a EEPROM) may be used for both a DVD player and a video cassette recorder. This sharing of read-only-memory has several advantages. One notable advantage is that the cost of manufacturing a combination DVD player and video cassette recorder can be reduced. This cost savings can be passed onto the consumer. Further, by combining parts in a combination VCR and DVD player, an average size of electronic components can be reduced. This is also desirable for consumers because smaller consumer electronic appliances are more convenient for users.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

Figures 1 and 2 are exemplary block diagrams illustrating apparatuses for managing option information in composite VCR and DVDPs.
Figure 3 is an exemplary flow chart illustrating a process for storing phase generator data.
Figure 4 is an exemplary flow chart illustrating a process of a method for managing option information.

### DETAILED DESCRIPTION OF PREFERRED EMBODIMENTS

A composite apparatus may compound a (Video Cassette Recorder) VCR and a (Digital Video Disc Player) DVDP as one apparatus. A microcomputer of a VCR in a composite apparatus may carry out a basic control performance carried out by each microcomputer. In a composite of a VCR and a DVDP, a first storage unit may be installed in the VCR unit to store option information of the VCR and a second storage unit may be installed in a DVDP unit to store option information of the DVDP. For example, a VCR and DVDP may store option information independently.

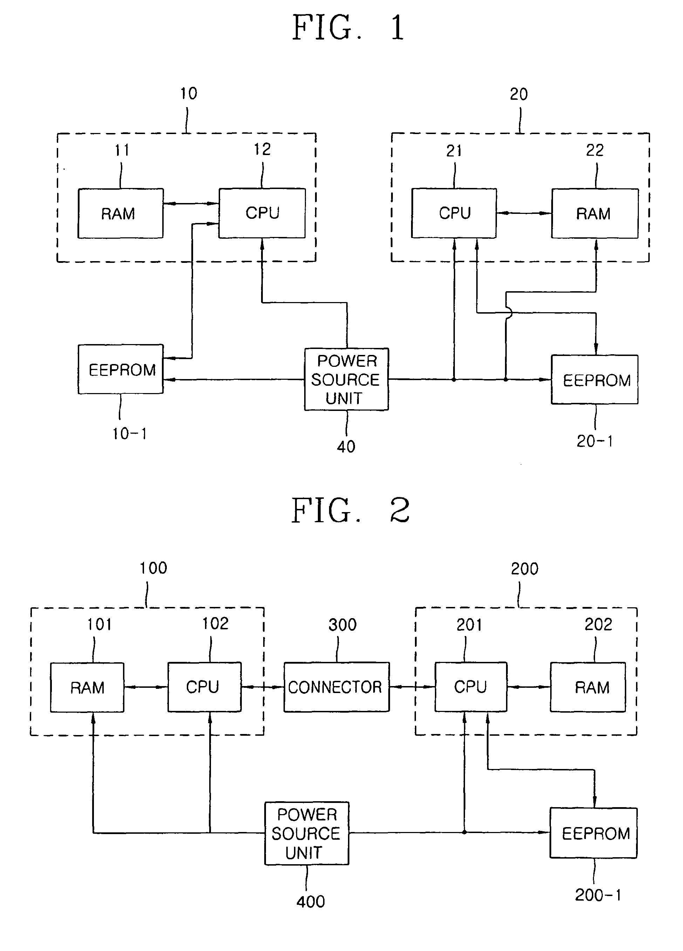

Exemplary Figure 1 is a block diagram illustrating an apparatus for managing option information in a composite apparatus of a VCR and a DVDP. An apparatus for managing option information in a composite of a VCR and a DVDP may comprise an electrically erasable programmable read-only memory (EEPROM) 10-1 installed at the VCR unit (not shown) and may store option information of the VCR unit. A composite may receive power from power source unit 40. Microcomputer 10 may be installed at a VCR unit in a composite VCR and DVDP and may control a driving of the VCR unit and may receive option information of the VCR unit from EEPROM 10-1. EEPROM 20-1 may be installed in DVDP unit (not shown) in a composite VCR and DVDP and may receive power from power source unit 40 and may store option information of a DVDP unit. Microcomputer 20 may be installed in a DVDP unit in a composite VCR and DVDP and may control a driving of the DVDP unit and may receive option information of the DVDP unit from EEPROM 20-1. First microcomputer 10 may include a central processing unit 12 and a random access memory (RAM) 11. Second microcomputer 20 may include central processing unit 21 and RAM 22

First microcomputer 10 may be installed in a VCR unit in a composite VCR and DVDP. First microcomputer 10 may control driving of a VCR unit. First microcomputer 10 may receive option information of a VCR unit from EEPROM 10-1 when a power source of a composite VCR and DVDP is applied. Second microcomputer 20 may be installed in a DVDP unit, may control driving of the DVDP unit, and may receive option information of the DVDP unit from EEPROM 20-1. Option information of a VCR and a DVDP may be displayed on a screen. EEPROM 10-1 and EEPROM 20-1 may independently read option information of a VCR unit and a DVDP unit. Accordingly, two EEPROMs (20-1 and 10-2) are financially costly and contribute to a large size of a composite apparatus.

Embodiments relate to an apparatus for managing option information in a composite VCR and DVDP and/or a related method thereof. In embodiments, one storage unit may be for storing option information of both a VCR unit and a DVDP of a composite VCR and DVDP. A microcomputer of a VCR unit or a microcomputer of a DVDP unit may receive either option information of the VCR unit or option information of the DVDP unit. Accordingly, in embodiments, costs of a composite VCR and DVDP may be reduced. Further, in embodiments, a size of composite apparatus may be minimized. Embodiments relate to an apparatus and/or method for managing option information in a composite VCR and DVDP.

Figure 2 is an exemplary block diagram illustrating an apparatus for managing option information in a composite VCR and DVDP according to embodiments of the present invention. An apparatus for managing option information of a composite VCR and DVDP may comprise a connector 300, a microcomputer 100, one EEPROM 200-1, and/or a microcomputer 200. Microcomputer 100 may be electrically connected to connector 300 and installed in a VCR unit (not shown) of a composite VCR and DVDP. Microcomputer 100 may be for controlling driving of a VCR unit and may be for receiving option information of a VCR unit by outputting a request signal through connector 300 when a composite VCR and DVDP is reset. Microcomputer 200 may be electrically connected to connector 300 and may be installed in a DVDP unit of a composite VCR and DVDP. Microcomputer 200 may be for controlling driving of a DVDP unit Microcomputer 200 may be for reading option information of a VCR unit from EEPROM 200-1 installed in a DVDP unit based on a request signal from microcomputer 100 installed in the VCR unit. Microcomputer 200 may be for outputting read option information to microcomputer 100 of a VCR unit. First microcomputer 100 may include a central processing unit 102 and/or a random access memory (RAM) 101. Second microcomputer 200 may include central processing unit 201 and RAM 202.

First central processing unit 102 of first microcomputer 100 may be installed in a VCR unit of a composite VCR and DVDP. First central processing unit 102 may control driving of a VCR unit. First central processing unit 102 may generate a request signal if a composite apparatus of a VCR and a DVDP is reset First central processing unit 102 may output a generated request signal to a second central processing unit 201, which may be installed in a DVDP unit (not shown) of composite VCR and DVDP through first connector 300.

Second central processing unit 201 may be installed in a DVDP unit. Second central processing unit 201 may control driving of a DVDP unit. Second central processing unit 201 may discriminate option information of a VCR unit between option information of a DVDP unit stored in EEPROM 200-1 in accordance with a request signal of first microcomputer 100. Second central processing unit 201 may output read information to first central processing unit 102. Power source unit 400 may supply power to first microcomputer 100, second microcomputer 200, and EEPROM 200-1. EEPROM 200-1 may be divided into two storage regions to separately store option information of a DVDP unit and a VCR unit. Option information of a DVDP unit may be recorded in one storage region and option information of a VCR unit may be recorded in another storage region.

Option information of a DVDP unit may include information about existence of a digital theater system (DTS), information about existence of a video compact disk (VCD) replay, information about existence of a MP3 (MPEG 1 layer 3) file replay, information about existence of a selection of a phase alternation by line system (PAL)/a national television system committee (NTSC), and/or information about existence of a super video home system (S-VHS) output. The option information of a VCR unit may include phase generator (PG) data, original equipment manufacture (OEM) buyer information, auto clock setting system (ACSS) on/off information, information about existence of a G-code, and/or information about existence of a front-jack. OEM-buyer information may be a remote controller code and on-screen display (OSD) format information.

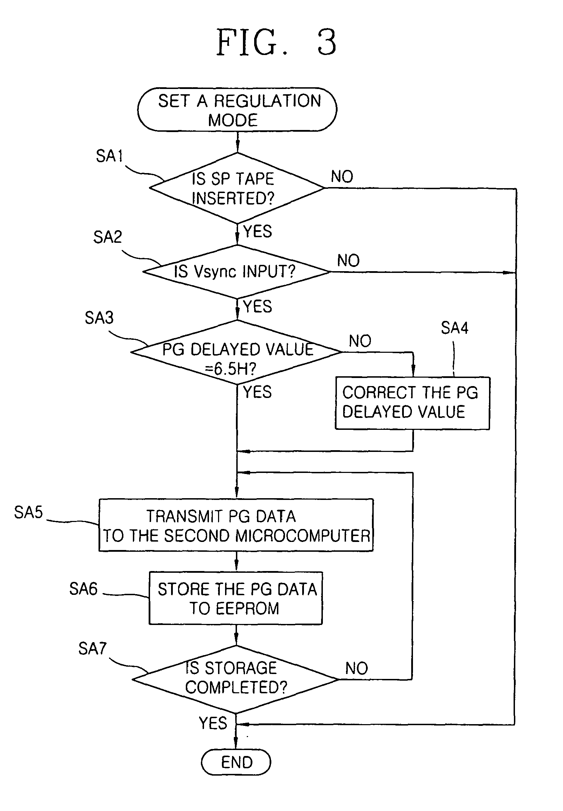

Original equipment manufacture (OEM) buyer information, auto clock setting system (ACSS) on/off information, information about existence of a G-code, and/or information about existence of a front-jack may be stored at a corresponding address of EEPROM 200-1 by setting an arbitrary storage mode. PG data information may be generated if first microcomputer 100 sets an additional PG data regulation mode and a set value is stored in a corresponding address of EEPROM 200-1 through an exemplary process illustrated in Figure 3. PG data may be stored in a composite apparatus and the composite apparatus may be sold to a consumer.

Figure 3 is an exemplary flow chart illustrating a process for storing PG data according to embodiments of the present invention. Embodiments relate to a method for storing PG data information during a production process. In a VCR unit, a tape for standard play may record a vertical synchronization signal (Vsync) at a 6.5H point from a bottom of a track. When the tape is replayed, a falling edge of a video switching signal (i.e. a signal of 30Hz generated at a time when a drum motor (not shown) rotates), may be regulated to be switched at a more forward point than 6.5H. This may be called a PG regulation.

A video set may have its own PG data so that a video switching signal and a vertical synchronization signal may maintain the 6.5H point correctly, regardless of an error of a PG sensor installed at a motor. A motor for driving a drum may read a signal recorded in a tape and may record a signal to the tape. Accordingly, a regulation mode for PG data may be set at a production process. PG data generated after setting a regulation mode may be stored at a corresponding region of EEPROM 200-1. Regulation mode may confirm that a tape for only standard play is inserted and the vertical synchronization signal (Vsync) is input and then corrects PG data (PG delayed value) to 6.5H (SA1-SA4). PG data may be a delayed value so that a video switching signal may be generated at a more forward point than a vertical synchronization signal (Vsync) of 6.5H.

Central processing unit 101 of first microcomputer 100 of a VCR unit may transmit PG data to central processing unit 201 of second microcomputer 200 of a DVDP unit. Central processing unit 201 of a DVDP unit may temporarily store PG data in RAM 202. Central processing unit 201 may store temporarily-stored PG data in a corresponding region of EEPROM 200-1. This process may be repeated. If storage of PG data in EEPROM 200-1 is not completed, PG data may be transmitted to central processing unit 201 of second microcomputer 200 of DVDP unit (SA5-SA6). This process may be repeated (SA5-SA7).

Option information of a VCR unit and option information of DVDP unit may be separately stored in EEPROM 200-1 and may be sold to a consumer. When an initial power source is supplied to a composite apparatus, first microcomputer 100 of VCR unit may be reset by supplying power to a composite apparatus after an elapse of a predetermined time from a point of time of an interruption of electric power. Accordingly, option information of a VCR and option information of a DVDP which may be temporarily stored in RAMs 101 and 202 may be deleted. To operate a VCR and a DVDP, option information of the VCR that may be stored in EEPROM 200-1 may need to be stored in RAM 101 of first microcomputer 100. Option information of a DVDP which may be stored in EEPROM 200-1 may need to be stored in RAM 201 of second microcomputer 200.

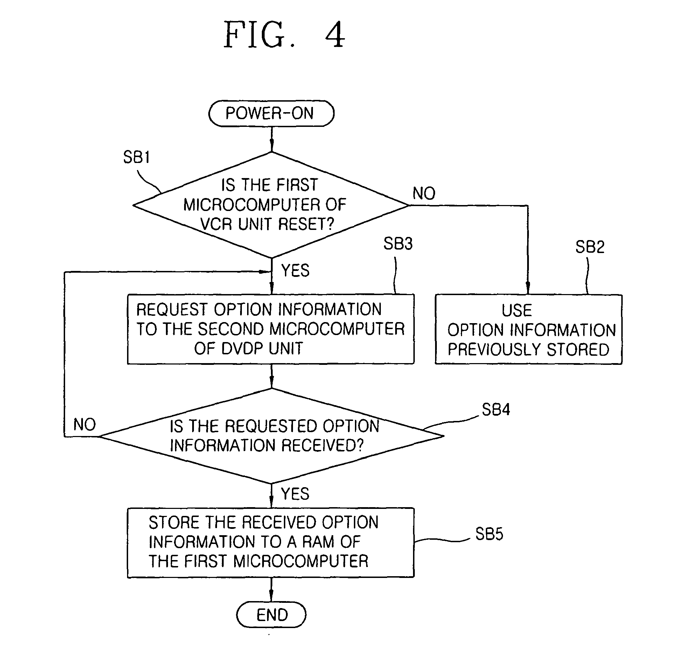

Figure 4 is an exemplary flow chart illustrating a process for realizing a method for managing option information in a composite apparatus according to embodiments of the present invention. If power is supplied to first microcomputer 100 from power source unit 400 (or a standby power source is continuously supplied), first microcomputer 100 may not reset. Central processing unit 102 of a VCR unit may continuously use option information of a VCR unit previously stored in RAM 101 (SB1, SB2). When a composite VCR and DVDP is restored after a power interruption for a predetermined time (e.g., ten minutes), first microcomputer 100 may reset. During reset, central processing unit 102 may generate a request signal and output a generated request signal to second microcomputer 200 of a DVDP, thereby requesting option information of a VCR unit (SB3).

Central processing unit 201 of a DVDP may read option information of a VCR in a corresponding region of EEPROM 200-1 on the basis of a request signal. Central processing unit 201 may output read option information of a VCR unit to central processing unit 102 of a VCR unit. Central processing unit 102 may receive option information of a VCR unit outputted from central processing unit 201. Central processing unit 102 may store received option information of a VCR unit in RAM 101 of the VCR unit. Central processing unit 102 may refer to option information of a VCR stored in RAM 101 when the VCR is operated (SB4, SB5). In embodiments of the present invention, a EEPROM may be substituted by other memory devices.

In embodiments of the present invention, EEPROM 200-1 may store option information of a DVDP unit and option information of a VCR unit of a composite VCR and DVDP. Accordingly, a microcomputer of a DVDP unit may receive option information of the DVDP unit from a EEPROM installed at a VCR unit For example, when a composite VCR and DVDP is operated by recovering power, which is interrupted for a predetermined time (e.g., ten minutes), second microcomputer 200 of a DVDP unit may be reset. Central processing unit 201 of a DVDP unit may generate a request signal and output the generated request signal to central processing unit 102, thereby requesting option information of a DVDP unit.

Central processing unit 102 of a VCR unit may read option information of a DVDP in a corresponding region of EEPROM 200-1 installed at an inner portion of the VCR unit on the basis of a request signal. Central processing unit 102 may output read option information of a DVDP unit to central processing unit 201 of the DVDP unit. Central processing unit 201 of a DVDP unit may receive option information of a DVDP unit outputted from central processing unit 102 of a VCR unit. Central processing unit 201 may store received option information of a DVDP unit in a RAM 202 of a DVDP unit. Central processing unit 201 may refer to option information of a DVDP unit stored in RAM 202 when the DVDP unit is operated.

In embodiments of the present invention, either option information of a VCR unit or option information of a DVDP unit may be received from one memory installed at an inner portion of the VCR unit or the DVDP unit of a composite VCR and DVDP. Accordingly, two EEPROMs 10-1 and 20-1 for independently storing option information of VCR unit and option information of DVDP unit do not necessarily need to be used. In embodiments of the present invention, option information of a VCR unit and option information of a DVDP unit may be stored together in one memory and only one EEPROM may be necessary. In embodiments of the present invention, one memory for storing option information of a VCR and option information of a DVDP together may be installed at an inner portion of the VCR or the DVDP of a composite VCR and DVDP, thereby reducing a cost of a composite apparatus and/or minimizing the size of a composite apparatus. Embodiments of the present invention may be applied in a wide variety of composite apparatuses that compound electronic products.

Embodiments of the present invention are for providing an apparatus for managing option information in a composite apparatus and a method thereof, wherein one storage unit for storing option information of a VCR unit and a DVDP unit together is installed in the composite apparatus of the VCR and the DVDP to receive the option information of the VCR unit and/or the DVDP unit.

The foregoing embodiments and advantages are merely exemplary and are not to be construed as limiting the present invention. The present teaching can be readily applied to other types of apparatuses. The description of the present invention is intended to be illustrative, and not to limit the scope of the claims.

## Claims

1. An apparatus comprising:
a power source (400);
a first signal reproduction and/or recording device powered by the power source (400);
a second signal reproduction and/or recording device powered by the power source (400); and
a read only memory (200-1) coupled to the first signal reproduction and/or recording device and the second signal reproduction and/or recording device, wherein:
- the first signal reproduction and/or recording device comprises a first random access memory (101),
- the second signal reproduction and/or recording device comprises a second random access memory (202),
- the first signal reproduction and/or recording device comprises a first processor (102) and the second signal reproduction and/or recording device comprises a second processor (201), wherein the first processor (102) and the second processor (201) are coupled, - the second signal reproduction and/or recording device is configured to selectively load data from the read only memory (200-1) to the second random access memory (202), and
- the first signal reproduction and/or recording device is configured to selectively load data from the read only memory (200-1) to the first random access memory (101) through the second processor (201) and the first processor (102).

2. The apparatus of claim 1, wherein the read only memory (200-1) is an electrically erasable programmable read only memory.

3. The apparatus of claim 1, wherein the first signal reproduction and/or recording device is a video cassette recorder.

4. The apparatus of claim 1, wherein the second signal reproduction and/or recording device is an optical disc player.

5. The apparatus of claim 1, wherein the apparatus is a module having a combined video cassette recorder and a DVD player, wherein the first signal reproduction and/or recording device is the DVD player and the second signal reproduction and/or recording device is the video cassette recorder.

6. The apparatus of claim 5, wherein the read only memory (200-1) is configured to store at least one of:
information about existence of a digital theater system with the DVD player;
information about existence of a video compact disk replay with the DVD player;
information about existence of a MP3 file replay with the DVD player;
information about existence of a selection of a phase alteration by line system of the DVD player;
phase generator data of the video cassette recorder;
original equipment manufacturer buyer information of the video cassette recorder;
auto clock setting system on/off information of the video cassette recorder;
information about existence of a G-code of the video cassette recorder; and
information about existence of a front-jack of the video cassette recorder.

7. The apparatus of claim 1, forming part of a composite apparatus, the composite apparatus compounding the first signal reproduction and/or recording device and the second signal reproduction and/or recording device, wherein the first signal reproduction and/or recording device is a first electronic signal reproduction and/or recording device and the second signal reproduction and/or recording device is a second electronic signal reproduction and/or recording device, the first electronic signal reproduction and/or recording device and the second electronic signal reproduction and/or recording device having different performances from each other, wherein
the apparatus is suitable for managing option information; and
the read only memory (200-1) is a storage unit configured to store option information of the first electronic signal reproduction and/or recording device and the second electronic signal reproduction and/or recording device; and
the first random access memory (101) forms part of a first microcomputer (100) configured to selectively load option information from the storage unit (200-1) to the first random access memory (101) by generating a request signal for option information of the first electronic signal reproduction and/or recording device and outputting the generated request signal for option information; and
the second random access memory (202) forms part of a second microcomputer (200) configured to selectively load option information of the first electronic signal reproduction and/or recording device (100) stored in the storage unit (200-1) to the first random access memory (101) on the basis of the request signal for option information and by outputting the read option information to the first microcomputer (100).

8. The apparatus of claim 7, further comprising a connector (300) configured to transmit the option information and the request signal.

9. The apparatus of claim 7, wherein the option information of the second electronic signal reproduction and/or recording device includes at least one of:
information about existence of a digital theater system (DTS);
information about existence of a video compact disk (VCD) replay;
information about existence of a MP3 (MPEG 1 layer 3) file replay;
information about existence of a selection of a phase alternation by line system (PAL)/a national television system committee (NTSC); and
information about existence of a super video home system (S-VHS) output.

10. The apparatus of claim 7, wherein the option information of the first electronic signal reproduction and/or recording device includes at least one of:
phase generator (PG) data;
original equipment manufacture (OEM) buyer information;
auto clock setting system (ACSS) on/off information;
information about existence and nonexistence of G-code; and
information about existence and nonexistence of front-jack.

11. The apparatus of claim 10, wherein the OEM-buyer information is composed of a remote controller code and on screen display (OSD) format information.

12. The apparatus of claim 7, wherein the storage unit (200-1) is installed only in the second electronic signal reproduction and/or recording device of the composite apparatus.

13. The apparatus of claim 7, wherein the storage unit (200-1) is installed only in the first electronic signal reproduction and/or recording device of the composite apparatus.

14. The apparatus of claim 7, wherein the storage unit (200-1) is an electrically erasable programmable read-only memory (EEPROM).

15. The apparatus of claim 14, wherein the EEPROM (200-1) is installed only in the second electronic signal reproduction and/or recording device of the composite apparatus.

16. The apparatus of claim 15, wherein the first microcomputer (100) is installed in the first electronic signal reproduction and/or recording device of the composite apparatus, and outputs the request signal to the second microcomputer (200) installed in the second electronic signal reproduction and/or recording device of the composite apparatus if the composite apparatus is reset, thereby receiving the option information of the first electronic signal reproduction and/or recording device.

17. The apparatus of claim 14, wherein the EEPROM (200-1) is installed only in the first electronic signal reproduction and/or recording device of the composite apparatus.

18. The apparatus of claim 17, wherein the first microcomputer (100) is installed in the second electronic signal reproduction and/or recording device of the composite apparatus and is configured to output the request signal to the second microcomputer (200) installed in the first electronic signal reproduction and/or recording device of the composite apparatus if the composite apparatus is reset, thereby receiving the option information of the second electronic signal reproduction and/or recording device.

19. A method for managing option information in a composite apparatus, the composite apparatus comprising a first electronic signal reproduction and/or recording device, a second electronic signal reproduction and/or recording device and a read only memory (200-1) coupled to the first electronic signal reproduction and/or recording device and to the second electronic signal reproduction and/or recording device, the first signal reproduction and/or recording device and the second signal reproduction and/or recording device having different performances from each other and powered by a common power source (400), wherein
- the first electronic signal reproduction and/or recording device comprises a first random access memory (101),
- the second electronic signal reproduction and/or recording device comprises a second random access memory (202),
- the first signal reproduction and/or recording device comprises a first processor (102) and the second signal reproduction and/or recording device comprises a second processor (201), wherein the first processor (102) and the second processor (201) are coupled,
- the second electronic signal reproduction and/or recording device being configured to selectively load data from the read only memory (200-1) to the second random access memory (202), and
- the first electronic signal reproduction and/or recording device being configured to selectively load data from the read only memory (200-1) to the first random access memory (101) through the second processor (201) and the first processor (102), the method comprising:
- storing option information of the first and second electronic signal reproduction and/or recording devices in the read only memory (SA6);
- requesting option information to the second electronic signal reproduction and/or recording device by the first electronic signal reproduction and/or recording device (SB3) if the composite apparatus is reset (SB1); and
- transmitting the requested option information to the first electronic signal reproduction and/or recording device from the second electronic signal reproduction and/or recording device.

20. The method of claim 19, wherein the read only memory (200-1) is installed only in the second electronic signal reproduction and/or recording device of the composite apparatus.

21. The method of claim 20, wherein the step of requesting (SB3) includes:
generating a request signal from a first microcomputer (100) installed in the first electronic signal reproduction and/or recording device of the composite apparatus if the composite apparatus is reset (SB1); and
outputting the request signal to a second microcomputer (200) installed in the second electronic signal reproduction and/or recording device.

22. The method of claim 21, wherein the transmitting includes steps of:
reading the option information of the first electronic signal reproduction and/or recording device previously stored in the read only memory (200-1) of the second microcomputer (200) on the basis of the request signal; and
transmitting the read option information to the first microcomputer (100).

23. The method of claim 19, wherein the option information of the second electronic signal reproduction and/or recording device includes at least one of:
information about existence of a digital theater system (DTS);
information about existence of a video compact disk (VCD) replay;
information about existence of a MP3 (MPEG 1 layer 3) file replay;
information about existence of a selection of a phase alternation by line system (PAL)/a national television system committee (NTSC); and
information about existence of a super video home system (S-VHS) output.

24. The method of claim 19, wherein the option information of the first electronic signal reproduction and/or recording device includes at least one of:
phase generator (PG) data;
original equipment manufacture (OEM) buyer information;
auto clock setting system (ACSS) on/off information;
information about existence of G-code; and
information about existence of front-jack.

## Patentansprüche

1. Vorrichtung, die Folgendes umfasst:
eine Stromquelle (400);
eine erste Signalwiedergabe- und/oder - aufzeichnungsvorrichtung, die durch die Stromquelle (400) betrieben wird;
eine zweite Signalwiedergabe- und/oder - aufzeichnungsvorrichtung, die durch die Stromquelle (400) betrieben wird; und
einen Nur-Lese-Speicher (200-1), der mit der ersten Signalwiedergabe- und/oder -aufzeichnungsvorrichtung und der zweiten Signalwiedergabe- und/oder - aufzeichnungsvorrichtung gekoppelt ist, wobei:
- die erste Signalwiedergabe- und/oder - aufzeichnungsvorrichtung einen ersten Direktzugriffsspeicher (101) umfasst,
- die zweite Signalwiedergabe- und/oder - aufzeichnungsvorrichtung einen zweiten Direktzugriffsspeicher (202) umfasst,
- die erste Signalwiedergabe- und/oder - aufzeichnungsvorrichtung einen ersten Prozessor (102) umfasst und die zweite Signalwiedergabe- und/oder - aufzeichnungsvorrichtung einen zweiten Prozessor (201) umfasst, wobei der erste Prozessor (102) und der zweite Prozessor (201) gekoppelt sind,
- die zweite Signalwiedergabe- und/oder - aufzeichnungsvorrichtung dafür konfiguriert ist, selektiv Daten aus dem Nur-Lese-Speicher (200-1) in den zweiten Direktzugriffsspeicher (202) zu laden, und
- die erste Signalwiedergabe- und/oder - aufzeichnungsvorrichtung dafür konfiguriert ist, durch den zweiten Prozessor (201) und den ersten Prozessor (102) selektiv Daten aus dem Nur-Lese-Speicher (200-1) in den ersten Direktzugriffsspeicher (101) zu laden.

2. Vorrichtung nach Anspruch 1, wobei der Nur-Lese-Speicher (200-1) ein elektrisch löschbarer programmierbarer Nur-Lese-Speicher ist.

3. Vorrichtung nach Anspruch 1, wobei die erste Signalwiedergabe- und/oder -aufzeichnungsvorrichtung ein Videokassettenrekorder ist.

4. Vorrichtung nach Anspruch 1, wobei die zweite Signalwiedergabe- und/oder -aufzeichnungsvorrichtung ein Abspielgerät für optische Disks ist.

5. Vorrichtung nach Anspruch 1, wobei die Vorrichtung ein Modul ist, das eine Videokassettenrekorder-/DVD-Player-Kombination enthält, wobei die erste Signalwiedergabe- und/oder -aufzeichnungsvorrichtung der DVD-Player ist und die zweite Signalwiedergabe- und/oder - aufzeichnungsvorrichtung der Videokassettenrekorder ist.

6. Vorrichtung nach Anspruch 5, wobei der Nur-Lese-Speicher (200-1) dafür konfiguriert ist, mindestens eines von Folgendem zu speichern:
Informationen über das Vorhandensein eines Digital Theater System in dem DVD-Player;
Informationen über das Vorhandensein einer Video Compact Disk-Wiedergabe in dem DVD-Player;
Informationen über das Vorhandensein einer MP3-Dateiwiedergabe in dem DVD-Player;
Informationen über das Vorhandensein einer Auswahl eines Phase Alteration by Line-Systems des DVD-Players;
Phasengeneratordaten des Videokassettenrekorders;
Originalgerätehersteller-Käufer-Informationen des Videokassettenrekorders;
Ein-/Aus-Informationen zum automatischen Uhrzeiteinstellsystem des Videokassettenrekorders;
Informationen über das Vorhandensein eines G-Codes des Videokassettenrekorders; und
Informationen über das Vorhandensein einer Frontbuchse des Videokassettenrekorders.

7. Vorrichtung nach Anspruch 1, die Teil eines Kombigerätes bildet, wobei das Kombigerät die erste Signalwiedergabe- und/oder -aufzeichnungsvorrichtung und die zweite Signalwiedergabe- und/oder -aufzeichnungsvorrichtung miteinander kombiniert, wobei die erste Signalwiedergabe- und/oder -aufzeichnungsvorrichtung eine erste elektronische Signalwiedergabe- und/oder - aufzeichnungsvorrichtung ist und die zweite Signalwiedergabe- und/oder -aufzeichnungsvorrichtung eine zweite elektronische Signalwiedergabe- und/oder - aufzeichnungsvorrichtung ist, wobei die erste elektronische Signalwiedergabe- und/oder - aufzeichnungsvorrichtung und die zweite elektronische Signalwiedergabe- und/oder -aufzeichnungsvorrichtung voneinander verschiedene Leistungswerte aufweisen, wobei
die Vorrichtung zum Verwalten von Optionsinformationen geeignet ist; und
der Nur-Lese-Speicher (200-1) eine Speichereinheit ist, die dafür konfiguriert ist, Optionsinformationen der ersten elektronischen Signalwiedergabe- und/oder - aufzeichnungsvorrichtung und der zweiten elektronischen Signalwiedergabe- und/oder -aufzeichnungsvorrichtung zu speichern; und
der erste Direktzugriffsspeicher (101) Teil eines ersten Mikrocomputers (100) bildet, der dafür konfiguriert ist, selektiv Optionsinformationen aus der Speichereinheit (200-1) in den ersten Direktzugriffsspeicher (101) zu laden, indem er ein Anforderungssignal für Optionsinformationen der ersten elektronischen Signalwiedergabe- und/oder -aufzeichnungsvorrichtung erzeugt und das erzeugte Anforderungssignal für Optionsinformationen ausgibt; und
der zweite Direktzugriffsspeicher (202) Teil eines zweiten Mikrocomputers (200) bildet, der dafür konfiguriert ist, selektiv Optionsinformationen der ersten elektronischen Signalwiedergabe- und/oder -aufzeichnungsvorrichtung (100), die in der Speichereinheit (200-1) gespeichert sind, in den ersten Direktzugriffsspeicher (101) auf der Basis des Anforderungssignals für Optionsinformationen und durch Ausgeben der gelesenen Optionsinformationen in den ersten Mikrocomputer (100) zu laden.

8. Vorrichtung nach Anspruch 7, die des Weiteren einen Verbinder (300) umfasst, der dafür konfiguriert ist, die Optionsinformationen und das Anforderungssignal zu übertragen.

9. Vorrichtung nach Anspruch 7, wobei die Optionsinformationen der zweiten elektronischen Signalwiedergabe- und/oder -aufzeichnungsvorrichtung mindestens eines von Folgendem umfassen:
Informationen über das Vorhandensein eines Digital Theater System (DTS);
Informationen über das Vorhandensein einer Video Compact Disk (VCD)-Wiedergabe;
Informationen über das Vorhandensein einer MP3 (MPEG 1 Layer 3)-Dateiwiedergabe;
Informationen über das Vorhandensein einer Auswahl eines Phase Alteration by Line (PAL)-Systems/eines National Television System Committee (NTSC)-Systems; und Informationen über das Vorhandensein eines Super Video Home System (S-VHS)-Ausgangs.

10. Vorrichtung nach Anspruch 7, wobei die Optionsinformationen der ersten elektronischen Signalwiedergabe- und/oder -aufzeichnungsvorrichtung mindestens eines von Folgendem umfassen:
Phasengenerator (PG)-Daten;
Originalgerätehersteller (OEM)-Käufer-Informationen;
Ein-/Aus-Informationen für ein automatisches Uhrzeiteinstellsystem (ACSS);
Informationen über das Vorhandensein und Nichtvorhandensein eines G-Codes; und
Informationen über das Vorhandensein und Nichtvorhandensein einer Frontbuchse.

11. Vorrichtung nach Anspruch 10, wobei die OEM-Käufer-Informationen aus einem Fernbedienungscode und On-screen Display (OSD)-Format-Informationen bestehen.

12. Vorrichtung nach Anspruch 7, wobei die Speichereinheit (200-1) nur in der zweiten elektronischen Signalwiedergabe- und/oder -aufzeichnungsvorrichtung des Kombigerätes installiert ist.

13. Vorrichtung nach Anspruch 7, wobei die Speichereinheit (200-1) nur in der ersten elektronischen Signalwiedergabe- und/oder -aufzeichnungsvorrichtung des Kombigerätes installiert ist.

14. Vorrichtung nach Anspruch 7, wobei die Speichereinheit (200-1) ein elektrisch löschbarer programmierbarer Nur-Lese-Speicher (EEPROM) ist.

15. Vorrichtung nach Anspruch 14, wobei der EEPROM (200-1) nur in der zweiten elektronischen Signalwiedergabe- und/oder - aufzeichnungsvorrichtung des Kombigerätes installiert ist.

16. Vorrichtung nach Anspruch 15, wobei der erste Mikrocomputer (100) in der ersten elektronischen Signalwiedergabe- und/oder -aufzeichnungsvorrichtung des Kombigerätes installiert ist und das Anforderungssignal an den zweiten Mikrocomputer (200), der in der zweiten elektronischen Signalwiedergabe- und/oder - aufzeichnungsvorrichtung des Kombigerätes installiert ist, ausgibt, wenn das Kombigerät zurückgesetzt wird, und **dadurch** die Optionsinformationen der ersten elektronischen Signalwiedergabe- und/oder -aufzeichnungsvorrichtung empfängt.

17. Vorrichtung nach Anspruch 14, wobei der EEPROM (200-1) nur in der ersten elektronischen Signalwiedergabe- und/oder - aufzeichnungsvorrichtung des Kombigerätes installiert ist.

18. Vorrichtung nach Anspruch 17, wobei der erste Mikrocomputer (100) in der zweiten elektronischen Signalwiedergabe- und/oder -aufzeichnungsvorrichtung des Kombigerätes installiert ist und dafür konfiguriert ist, das Anforderungssignal an den zweiten Mikrocomputer (200), der in der ersten elektronischen Signalwiedergabe- und/oder -aufzeichnungsvorrichtung des Kombigerätes installiert ist, auszugeben, wenn das Kombigerät zurückgesetzt wird, und **dadurch** die Optionsinformationen der zweiten elektronischen Signalwiedergabe- und/oder - aufzeichnungsvorrichtung empfängt.

19. Verfahren zum Verwalten von Optionsinformationen in einem Kombigerät, wobei das Kombigerät eine erste elektronische Signalwiedergabe- und/oder -aufzeichnungsvorrichtung, eine zweite elektronische Signalwiedergabe- und/oder - aufzeichnungsvorrichtung und einen Nur-Lese-Speicher (200-1), der mit der ersten elektronischen Signalwiedergabe- und/oder -aufzeichnungsvorrichtung und mit der zweiten elektronischen Signalwiedergabe- und/oder - aufzeichnungsvorrichtung gekoppelt ist, umfasst, wobei die erste Signalwiedergabe- und/oder -aufzeichnungsvorrichtung und die zweite Signalwiedergabe- und/oder - aufzeichnungsvorrichtung voneinander verschiedene Leistungswerte aufweisen und durch eine gemeinsame Stromquelle (400) betrieben werden, wobei
- die erste elektronische Signalwiedergabe- und/oder - aufzeichnungsvorrichtung einen ersten Direktzugriffsspeicher (101) umfasst,
- die zweite elektronische Signalwiedergabe- und/oder - aufzeichnungsvorrichtung einen zweiten Direktzugriffsspeicher (202) umfasst,
- die erste Signalwiedergabe- und/oder - aufzeichnungsvorrichtung einen ersten Prozessor (102) umfasst und die zweite Signalwiedergabe- und/oder - aufzeichnungsvorrichtung einen zweiten Prozessor (201) umfasst, wobei der erste Prozessor (102) und der zweite Prozessor (201) gekoppelt sind,
- die zweite elektronische Signalwiedergabe- und/oder - aufzeichnungsvorrichtung dafür konfiguriert ist, selektiv Daten aus dem Nur-Lese-Speicher (200-1) in den zweiten Direktzugriffsspeicher (202) zu laden, und
- die erste elektronische Signalwiedergabe- und/oder - aufzeichnungsvorrichtung dafür konfiguriert ist, durch den zweiten Prozessor (201) und den ersten Prozessor (102) selektiv Daten aus dem Nur-Lese-Speicher (200-1) in den ersten Direktzugriffsspeicher (101) zu laden, wobei das Verfahren Folgendes umfasst:
- Speichern von Optionsinformationen der ersten und der zweiten elektronischen Signalwiedergabe- und/oder -aufzeichnungsvorrichtung in dem Nur-Lese-Speicher (SA6);
- Anfordern von Optionsinformationen durch die erste elektronische Signalwiedergabe- und/oder - aufzeichnungsvorrichtung (SB3) bei der zweiten elektronischen Signalwiedergabe- und/oder - aufzeichnungsvorrichtung, wenn das Kombigerät zurückgesetzt wird (SB1); und
- Übertragen der angeforderten Optionsinformationen aus der zweiten elektronischen Signalwiedergabe- und/oder - aufzeichnungsvorrichtung zu der ersten elektronischen Signalwiedergabe- und/oder - aufzeichnungsvorrichtung.

20. Verfahren nach Anspruch 19, wobei der Nur-Lese-Speicher (200-1) nur in der zweiten elektronischen Signalwiedergabe- und/oder -aufzeichnungsvorrichtung des Kombigerätes installiert ist.

21. Verfahren nach Anspruch 20, wobei der Schritt des Anforderns (SB3) Folgendes enthält:
Erzeugen eines Anforderungssignals aus einem ersten Mikrocomputer (100), der in der ersten elektronischen Signalwiedergabe- und/oder -aufzeichnungsvorrichtung des Kombigerätes installiert ist, wenn das Kombigerät zurückgesetzt wird (SB1); und
Ausgeben des Anforderungssignals an einen zweiten Mikrocomputer (200), der in der zweiten elektronischen Signalwiedergabe- und/oder -aufzeichnungsvorrichtung installiert ist.

22. Verfahren nach Anspruch 21, wobei das Übertragen folgende Schritte umfasst:
Lesen der Optionsinformationen der ersten elektronischen Signalwiedergabe- und/oder -aufzeichnungsvorrichtung, die zuvor in dem Nur-Lese-Speicher (200-1) des zweiten Mikrocomputers (200) gespeichert waren, auf der Basis des Anforderungssignals; und
Übertragen der gelesenen Optionsinformationen zu dem ersten Mikrocomputer (100).

23. Verfahren nach Anspruch 19, wobei die Optionsinformationen der zweiten elektronischen Signalwiedergabe- und/oder - aufzeichnungsvorrichtung mindestens eines von Folgendem umfassen:
Informationen über das Vorhandensein eines Digital Theater System (DTS);
Informationen über das Vorhandensein einer Video Compact Disk (VCD)-Wiedergabe;
Informationen über das Vorhandensein einer MP3 (MPEG 1 Layer 3) Dateiwiedergabe;
Informationen über das Vorhandensein einer Auswahl eines Phase Alteration by Line (PAL)-Systems/eines National Television System Committee (NTSC)-Systems; und
Informationen über das Vorhandensein eines Super Video Home System (S-VHS)-Ausgangs.

24. Verfahren nach Anspruch 19, wobei die Optionsinformationen der ersten elektronischen Signalwiedergabe- und/oder - aufzeichnungsvorrichtung mindestens eines von Folgendem umfassen:
Phasengenerator (PG)-Daten;
Originalgerätehersteller (OEM)-Käufer-Informationen;
Ein-/Aus-Informationen für ein automatisches Uhrzeiteinstellsystem (ACSS);
Informationen über das Vorhandensein und Nichtvorhandensein eines G-Codes; und
Informationen über das Vorhandensein und Nichtvorhandensein einer Frontbuchse.

## Revendications

1. Appareil comprenant :
une source d'alimentation électrique (400) ;
un premier dispositif de reproduction et/ou d'enregistrement de signal alimenté par la source d'alimentation électrique (400) ;
un deuxième dispositif de reproduction et/ou d'enregistrement de signal alimenté par la source d'alimentation électrique (400) ;
une mémoire ROM (200-1) couplée au premier dispositif de reproduction et/ou d'enregistrement de signal et au deuxième dispositif de reproduction et/ou d'enregistrement de signal, dans lequel :
- le premier dispositif de reproduction et/ou d'enregistrement de signal comprend une première mémoire RAM (101),
- le deuxième dispositif de reproduction et/ou d'enregistrement de signal comprend une deuxième mémoire RAM (202),
- le premier dispositif de reproduction et/ou d'enregistrement de signal comprend un premier processeur (102) et le deuxième dispositif de reproduction et/ou d'enregistrement de signal comprend un deuxième processeur (201), dans lequel le premier processeur (102) et le deuxième processeur (201) sont couplés,
- le deuxième dispositif de reproduction et/ou d'enregistrement de signal est configuré pour charger sélectivement des données de la mémoire ROM (200-1) dans la deuxième mémoire RAM (202), et
- le premier dispositif de reproduction et/ou d'enregistrement de signal est configuré pour charger sélectivement des données de la mémoire ROM (200-1) dans la première mémoire RAM (101) à travers le deuxième processeur (201) et le premier processeur (102).

2. Appareil selon la revendication 1, dans lequel la mémoire ROM (200-1) est une mémoire EEPROM.

3. Appareil selon la revendication 1, dans lequel le premier dispositif de reproduction et/ou d'enregistrement de signal est un magnétoscope.

4. Appareil selon la revendication 1, dans lequel le deuxième dispositif de reproduction et/ou d'enregistrement de signal est un lecteur de disque optique.

5. Appareil selon la revendication 1, dans lequel l'appareil est un module ayant une combinaison d'un magnétoscope et d'un lecteur de DVD, dans lequel le premier dispositif de reproduction et/ou d'enregistrement de signal est le lecteur de DVD et le deuxième dispositif de reproduction et/ou d'enregistrement de signal est le magnétoscope.

6. Appareil selon la revendication 5, dans lequel la mémoire ROM (200-1) est configurée pour stocker au moins l'une de
une information sur l'existence d'un système de cinéma numérique avec le lecteur de DVD ;
une information sur l'existence d'une lecture de disque compact vidéo avec le lecteur de DVD ;
une information sur l'existence d'une lecture de fichier MP3 avec le lecteur de DVD ;
une information sur l'existence d'une sélection d'un système PAL du lecteur de DVD ;
des données de générateur de phase du magnétoscope ;
une information d'acheteur de fabricant d'équipement d'origine du magnétoscope ;
une information d'activation/désactivation de système de réglage automatique d'horloge du magnétoscope ;
une information sur l'existence d'un code G du magnétoscope ; et
une information sur l'existence d'une prise jack frontale sur le magnétoscope.

7. Appareil selon la revendication 1, faisant partie d'un appareil composite, l'appareil composite comportant le premier dispositif de reproduction et/ou d'enregistrement de signal et le deuxième dispositif de reproduction et/ou d'enregistrement de signal, dans lequel le premier dispositif de reproduction et/ou d'enregistrement de signal est un premier dispositif de reproduction et/ou d'enregistrement de signal électronique et le deuxième dispositif de reproduction et/ou d'enregistrement de signal est un deuxième dispositif de reproduction et/ou d'enregistrement de signal électronique, le premier dispositif de reproduction et/ou d'enregistrement de signal électronique et le deuxième dispositif de reproduction et/ou d'enregistrement de signal électronique ayant des performances différentes entre eux, dans lequel
l'appareil est approprié pour gérer des informations d'option ; et
la mémoire ROM (200-1) est une unité de stockage configurée pour stocker des informations d'option du premier dispositif de reproduction et/ou d'enregistrement de signal électronique et du deuxième dispositif de reproduction et/ou d'enregistrement de signal électronique ; et
la première mémoire RAM (101) fait partie d'un premier micro-ordinateur (100) configuré pour charger sélectivement des informations d'option de l'unité de stockage (200-1) dans la première mémoire RAM (101) en générant un signal de demande d'informations d'option du premier dispositif de reproduction et/ou d'enregistrement de signal électronique et en délivrant le signal généré de demande d'informations d'option ; et
la deuxième mémoire RAM (202) fait partie d'un deuxième micro-ordinateur (200) configuré pour charger sélectivement des informations d'option du premier dispositif de reproduction et/ou d'enregistrement de signal électronique (100) stockées dans l'unité de stockage (200-1) dans la première mémoire RAM (101) sur la base du signal de demande d'informations d'option et délivrer les informations d'option lues au premier micro-ordinateur (100).

8. Appareil selon la revendication 7, comprenant en outre un connecteur (300) configuré pour transmettre les informations d'option et le signal de demande.

9. Appareil selon la revendication 7, dans lequel les informations d'option du deuxième dispositif de reproduction et/ou d'enregistrement de signal électronique comprennent au moins l'une de :
une information sur l'existence d'un système de cinéma numérique (DTS) ;
une information sur l'existence d'une lecture de disque compact vidéo (VCD) ;
une information sur l'existence d'une lecture de fichier MP3 (MPEG 1 couche 3) ;
une information sur l'existence d'une sélection d'un système PAL/NTSC ; et
une information sur l'existence d'une sortie S-VHS.

10. Appareil selon la revendication 7, dans lequel les informations d'option du premier dispositif de reproduction et/ou d'enregistrement de signal électronique comprennent au moins l'une de :
des données de générateur de phase (PG) ;
une information d'acheteur de fabricant d'équipement d'origine (OEM) ;
une information d'activation/désactivation de système de réglage automatique d'horloge (ACSS) ;
une information sur l'existence ou la non-existence de code G ; et
une information sur l'existence ou la non-existence d'une prise jack frontale.

11. Appareil selon la revendication 10, dans lequel l'information d'acheteur OEM se compose d'un code de télécommande et d'une information de format d'affichage à l'écran (OSD).

12. Appareil selon la revendication 7, dans lequel l'unité de stockage (200-1) est installée uniquement dans le deuxième dispositif de reproduction et/ou d'enregistrement de signal électronique de l'appareil composite.

13. Appareil selon la revendication 7, dans lequel l'unité de stockage (200-1) est installée uniquement dans le premier dispositif de reproduction et/ou d'enregistrement de signal électronique de l'appareil composite.

14. Appareil selon la revendication 7, dans lequel l'unité de stockage (200-1) est une mémoire EEPROM.

15. Appareil selon la revendication 14, dans lequel la mémoire EEPROM (200-1) est installée uniquement dans le deuxième dispositif de reproduction et/ou d'enregistrement de signal électronique de l'appareil composite.

16. Appareil selon la revendication 15, dans lequel le premier micro-ordinateur (100) est installé dans le premier dispositif de reproduction et/ou d'enregistrement de signal électronique de l'appareil composite, et délivre le signal de demande au deuxième micro-ordinateur (200) installé dans le deuxième dispositif de reproduction et/ou d'enregistrement de signal électronique de l'appareil composite si l'appareil composite est réinitialisé, en recevant de ce fait les informations d'option du premier dispositif de reproduction et/ou d'enregistrement de signal électronique.

17. Appareil selon la revendication 14, dans lequel la mémoire EEPROM (200-1) est installée uniquement dans le premier dispositif de reproduction et/ou d'enregistrement de signal électronique de l'appareil composite.

18. Appareil selon la revendication 17, dans lequel le premier micro-ordinateur (100) est installé dans le deuxième dispositif de reproduction et/ou d'enregistrement de signal électronique de l'appareil composite et est configuré pour délivrer le signal de demande au deuxième micro-ordinateur (200) installé dans le premier dispositif de reproduction et/ou d'enregistrement de signal électronique de l'appareil composite si l'appareil composite est réinitialisé, en recevant de ce fait les informations d'option du deuxième dispositif de reproduction et/ou d'enregistrement de signal électronique.

19. Procédé de gestion d'informations d'option dans un appareil composite, l'appareil composite comprenant un premier dispositif de reproduction et/ou d'enregistrement de signal électronique, un deuxième dispositif de reproduction et/ou d'enregistrement de signal électronique et une mémoire ROM (200-1) couplée au premier dispositif de reproduction et/ou d'enregistrement de signal électronique et au deuxième dispositif de reproduction et/ou d'enregistrement de signal électronique, le premier dispositif de reproduction et/ou d'enregistrement de signal et le deuxième dispositif de reproduction et/ou d'enregistrement de signal ayant des performances différentes entre eux et étant alimentés par une source commune d'alimentation électrique (400), dans lequel
- le premier dispositif de reproduction et/ou d'enregistrement de signal électronique comprend une première mémoire RAM (101),
- le deuxième dispositif de reproduction et/ou d'enregistrement de signal électronique comprend une deuxième mémoire RAM (202),
- le premier dispositif de reproduction et/ou d'enregistrement de signal comprend un premier processeur (102) et le deuxième dispositif de reproduction et/ou d'enregistrement de signal électronique comprend un deuxième processeur (201), dans lequel le premier processeur (102) et le deuxième processeur (201) sont couplés,
- le deuxième dispositif de reproduction et/ou d'enregistrement de signal électronique étant configuré pour charger sélectivement des données de la mémoire ROM (200-1) dans la deuxième mémoire RAM (202), et
- le premier dispositif de reproduction et/ou d'enregistrement de signal électronique étant configuré pour charger sélectivement des données de la mémoire ROM (200-1) dans la première mémoire RAM (101) à travers le deuxième processeur (201) et le premier processeur (102), le procédé comprenant :
- le stockage d'informations d'option des premier et deuxième dispositifs de reproduction et/ou d'enregistrement de signal électronique dans la mémoire ROM (SA6) ;
- la demande d'informations d'option au deuxième dispositif de reproduction et/ou d'enregistrement de signal électronique par le premier dispositif de reproduction et/ou d'enregistrement de signal électronique (SB3) si l'appareil composite est réinitialisé (SB1)
; et
- la transmission des informations d'option demandées du deuxième dispositif de reproduction et/ou d'enregistrement de signal électronique au premier dispositif de reproduction et/ou d'enregistrement de signal électronique.

20. Procédé selon la revendication 19, dans lequel la mémoire ROM (200-1) est installée uniquement dans le deuxième dispositif de reproduction et/ou d'enregistrement de signal électronique de l'appareil composite.

21. Procédé selon la revendication 20, dans lequel l'étape de demande (SB-3) comprend :
la génération d'un signal de demande d'un premier micro-ordinateur (100) installé dans le premier dispositif de reproduction et/ou d'enregistrement de signal électronique de l'appareil composite si l'appareil composite est réinitialisé (SB1) ; et
la délivrance du signal de demande à un deuxième micro-ordinateur (200) installé dans le deuxième dispositif de reproduction et/ou d'enregistrement de signal électronique.

22. Procédé selon la revendication 21, dans lequel la transmission comprend les étapes suivantes :
la lecture des informations d'option du premier dispositif de reproduction et/ou d'enregistrement de signal électronique précédemment stockées dans la mémoire ROM (200-1) du deuxième micro-ordinateur (200) sur la base du signal de demande ; et
la transmission des informations d'option lues au premier micro-ordinateur (100).

23. Procédé selon la revendication 19, dans lequel les informations d'option du deuxième dispositif de reproduction et/ou d'enregistrement de signal électronique comprennent au moins l'une de :
une information sur l'existence d'un système de cinéma numérique (DTS) ;
une information sur l'existence d'une lecture de disque compact vidéo (VCD) ;
une information sur l'existence d'une lecture de fichier MP3 (MPEG 1 couche 3) ;
une information sur l'existence d'une sélection d'un système PAL/NTSC ; et
une information sur l'existence d'une sortie S-VHS.

24. Procédé selon la revendication 19, dans lequel les informations d'option du premier dispositif de reproduction et/ou d'enregistrement de signal électronique comprennent au moins l'une de :
des données de générateur de phase (PG) ;
une information d'acheteur de fabricant d'équipement d'origine (OEM) ;
une information d'activation/désactivation de système de réglage automatique d'horloge (ACSS) ;
une information sur l'existence de code G ; et
une information sur l'existence d'une prise jack frontale.
